# EUROPÄISCHE PATENTSCHRIFT

(11) **EP 0 315 729 B1**
(45) Veröffentlichungstag und Bekanntmachung des Hinweises auf die Patenterteilung: **12.03.1997**
(21) Anmeldenummer: 88106841.5
(22) Anmeldetag: 28.04.1988
(51) Int. Cl.: A47B 96/14, F16B 12/20

(54) **Rahmenartige Flächen- und Raumgebilde, insbesondere für Möbel und Innenausbauten, sowie zugehöriger Bauteilsatz mit Tragkörper und Zubehör**
Flat and three-dimensional structure, particularly for frame like furniture and interior arrangements, as well as building elements therefor with support parts and accessories
Structure plane et tridimensionnelle telle qu'un cadre, en particulier pour des meubles et des aménagements intérieurs, ainsi que les éléments de construction à cet effet avec les pièces de support et les accessoires

(30) Priorität: 28.04.1987 CH 1620/87
(43) Veröffentlichungstag der Anmeldung: 17.05.1989
(73) Patentinhaber: Diehl, Hans, CH-5452 Oberrohrdorf (CH)
(72) Erfinder: Diehl, Hans, CH-5452 Oberrohrdorf (CH)
(74) Vertreter: Fiedler, Otto Karl, Dipl.-Ing.

(56) Entgegenhaltungen:
- CH-A- 544 910
- DE-A- 3 241 877
- DE-A- 3 406 550
- DE-C- 2 933 492
- US-A- 4 163 537

## Beschreibung

Die Erfindung betrifft einen stabförmigen Tragkörper für rahmenartige Flächen- oder Raumgebilde, der ein Querschnitts-Aussenprofil mit mindestens einem konkaven Abschnitt aufweist. Der Gegenstand der Erfindung erstreckt sich auf zugehörige Bauteilsätze sowie Anschlusselemente und Verbindungsvorrichtungen sowie auf entsprechende Gebilde selbst.

Flächen- und Raumgebilde im Sinne der Erfindung sind im wesentlichen rahmenartig ausgebildet bzw. aus Rahmenfeldern fachwerkartig zusammengefügt. Die einzelnen Rahmenfelder sind dabei durch stabförmige Tragkörper begrenzt. Letztere können grundsätzlich in an sich bekannter Weise - insbesondere im Bereich ihrer Endabschnitte - stoffschlüssig, etwa durch Klebung, miteinander verbunden werden, jedoch kommen auch formschlüssige und vorzugsweise lösbare Verbindungsvorrichtungen für diesen Zweck in Betracht.

Aus der US-A-4 163 537 ist ein stabförmiger Tragkörper für die vorgenannten Zwecke bekannt, der als Extrusionsprofilkörper von über die Stablänge gleichbleibender Querschnittsform ausgebildet ist. Die Möglichkeit einer Gliederung innerhalb eines solchen Stabkörpers aus konstruktiven oder ästhetischen Gründen ist daher nicht ohne weiteres gegeben. Für die Verbindung von Stabkörpern miteinander sind an den Stabumfang angesetzte, voluminöse Vorrichtungen vorgesehen.

Aus der DE-C-2 933 492 sind als Rahmenbauelemente Stabkörper in Form von einfachen Rohren mit Kreisringquerschnitt bekannt. Für die Verbindung der Rohrkörper miteinander sind wiederum am Rohrumfang angesetzte oder in die Rohrenden eingesetzte Elemente vorgesehen, die ebenfalls im wesentlichen konvexe Voll- oder Teil-Kreisquerschnitte aufweisen. Insoweit gelten auch hier die für den vorgenannten Stand der Technik angeführten Gesichtspunkte.

Aufgabe der Erfindung ist demgegenüber zunächst die Schaffung eines stabförmigen Tragkörpers der eingangs genannten Art und darauf aufbauend insbesondere die Schaffung von zugehörigen Bauteilsätzen sowie Anschlusselementen und Verbindungsvorrichtungen sowie auf entsprechende Gebilde selbst, d.h. insbesondere eines Bauelementsystems, womit folgende Eigenschaften erreichbar sind:
- Optimierung der Längsgliederung und der Querschnittsform des stabförmigen Tragkörpers hinsichtlich ihres Profils gemäss Kriterien der Beanspruchsverteilung und nach ästhetischen Gesichtspunkten,
- optimierte Gestaltung der Endabschnitte des stabförmigen Tragkörpers nach Kriterien der Verbindungsstabilität und eines ästhetisch befriedigenden Überganges zu anstossenden Nachbarelementen,
- Optimierung des Verlaufes der Tragkörper-Stabachse im Hinblick auf vorgegebene Formen des Flächen- bzw. Raumgebildes sowie auf die Kraftflüsse innerhalb der fachwerkartigen Struktur des Gebildes,
- Formanpassung der Anschlusselemente für die Herstellung von Stossverbindungen zwischen den verschiedenen Bauelementen der Fachwerkstruktur,
- optimierte Zusammensetzung von Bauteilsätzen im Hinblick auf die vorgenannten Kriterien.

Diese Aufgabenkomponenten verstehen sich im Hinblick auf die verschiedenen Lösungsvarianten innerhalb der Erfindung fakultativ sowie gegebenenfalls auch kumulativ. Die erfindungsgemässe Aufgabenlösung kennzeichnet sich hinsichtlich des stabförmigen Tragkörpers durch die Merkmale des Anspruchs 1, hinsichtlich der Bauteilsätze durch die Merkmale des Anspruchs 18 bzw. 21 bzw. 24, hinsichtlich der Anschlusselemente durch die Merkmale des Anspruchs 28 bzw. 29 bzw. 30, hinsichtlich der Verbindungsvorrichtung durch die Merkmale des Anspruchs 32 und hinsichtlich des Flächen- oder Raumgebildes durch die Merkmale des Anspruchs 34.

Die abschnittsweise unterschiedliche Profilgestaltung der stabförmigen Tragkörper, insbesondere ein Wechsel zwischen Abschnitten mit geradlinig oder konvex gekrümmt begrenztem und mit ganz oder teilweise konkav begrenztem Aussenprofil ermöglicht die Vereinigung von interessanten ästhetischen Formeffekten mit einer weitgehend vollständigen Ausnutzung der Gesamt-Querschnittsabmessungen für die Maximierung des Widerstandsmomentes in den Bereichn höchster Biegebeanspruchung. Mit Vorteil werden dabei in den Stabendbereichen konkav begrenzte Profilabschnitte vorgesehen. Wesentlich für eine harmonische Formgestaltung ist ferner ein kalottenförmiger, insbesondere zum konkav begrenzten Abschnitt hin stetiger Profilübergang.

In manchen Anwendungsfällen kann eine freizügige Formgestaltung der Tragkörper ohne grundsätzliche Einschränkung auf prismatische oder allgemein-zylindrische Stabformen bei Anwendung entsprechender Fertigungsmethoden, wie Formpressen oder Giessen, gegebenenfalls aber auch spanabhebende Formgebung aus geeigneten, strangförmigen Grundkörpern, vorgesehen werden. Hierzu sieht eine Weiterbildung der Erfindung an den Stabenden das einstückige Anformen von Übergangskörpern bzw. von Übergangsoberflächen vor, die eine Formanpassung bezüglich anstossender Tragkörper oder anderer Bauelemente verwirklichen.

Eine andere wesentliche Weiterbildung der Erfindung zielt darauf ab, eine Aufeinanderfolge von Tragkörperabschnitten unterschiedlichen Profils mit formangleichenden Profilübergängen zu verwirklichen, ohne den mit der Herstellung von Stabkörpern nicht durchgehend gleicher Profilform verbundenen, erhöhten Aufwand in Kauf nehmen zu müssen. Dazu sieht die Erfindung Tragkörper von allgemein-zylindrischer oder polygonal-prismatischer Querschnittsform vor, die miteinander durch geeignete, z.B. an sich bekannte, form- oder stoffschlüssige Befestigungsmittel miteinander verbunden sind, und zwar vorzugsweise im Bereich ihrer Endabschnitte und im mit im wesentlichen fluchtenden Stabachsen. In Verbindung damit sieht die Erfindung nun relativ kurze Anschlusselemente zur Formanpassung bezüglich benachbarter Tragkörper oder anderer Bauelemente vor. Diese Anschlusselemente ermöglichen durch ihre Formanpassung auch besonders tragfähige Anschlussverbindungen.

Weitere Merkmale und Vorteile der Erfindung werden anhand der in den Zeichnungen - soweit nichts anderes angemerkt in perspektivischer Ansicht - schematisch dargestellten Ausführungsbeispiele erläutert. Hierin zeigt:
- Fig.1: eine Teil-Seitenansicht einer ersten Ausführung eines erfindungsgemässen Tragkörpers mit einem für Anschlusszwecke formangepassten Endabschnitt,
- Fig.2: einen durch Zusammenstoss verschiedenartiger Tragkörper nach der Erfindung gebildeten Eckbereich eines rahmenartigen Raumgebildes,
- Fig.3: einen Endabschnitt einer Hohlprofilausführung eines erfindungsgemässen Tragkörpers,
- Fig.4 bis Fig.11: verschiedene Ausführungen für Anschlusszwecke formangepasster Endabschnitte von stabförmigen Tragkörpern,
- Fig.12: eine erste Ausführung eines erfindungsgemässen Anschlusselementes in Verbindung mit dem formangepassten Endabschnitt eines stabförmigen Tragkörpers,
- Fig.13 und Fig.14: je eine abgewandelte Ausführung eines erfindungsgemässen Anschlusselementes,
- Fig.15: einen mittels einer weiteren Ausführung eines erfindungsgemässen Anschlusselementes, im übrigen ähnlich Fig.2 gebildeten Eckbereich eines rahmenartigen Raumgebildes,
- Fig.16: in perspektivischer Ansicht und
- Fig.17: in Draufsicht eine für vielachsigen räumlichen Anschluss von Rahmenbauelementen ausgebildete Ausführung eines erfindungsgemässen Anschlusselementes,
- Fig.18: ein Anschlusselement für vielachsigen räumlichen Anschluss ähnlich Fig.16 und 17 mit in Form eines Raumkreuzes angesetzten Tragkörpern, jedoch mit formschlüssigen, lösbaren Verbindungsvorrichtungen für die verschiedenen Anschlussachsen, dargestellt als Schnittansicht in der zu zwei Anschlussachsen parallelen Schnittebene A-A in Fig.19,
- Fig.19: eine Schnittansicht des Anschlusselementes mit Innenaufbau der Befestigungsvorrichtung in einer Diagonal-Schnittebene B-B gemäss Fig.18,
- Fig.20: eine abgewandelte Ausführung des Anschlusselementes mit Verbindungsvorrichtung in einer Teilschnittansicht entsprechend Fig.18,
- Fig.21: einen Querschnitt eines stabförmigen Tragkörpers mit formangepasstem Füllelement,
- Fig.22: zwei benachbart mit gegenseitigem Abstand angeordnete, stabförmige Tragkörper in Draufsicht parallel zu den Stabachsen, mit einem laschenartigen Querverbindungselement,
- Fig.23: eine Ausführung eines stabförmigen Tragkörpers nach der Erfindung mit kreisbogenförmig verlaufender Stabachse, in Ansicht auf die Kreisbogenebene,
- Fig.24: in grösserem Massstab den Querschnitt des Tragkörpers gemäss Schnittebene C-C in Fig.23,
- Fig.25 und Fig.26: schematisch vereinfachte Darstellungen von Möbelkörpern mit rahmenartigem Gestell aus Tragkörpern nach der Erfindung und
- Fig.27: den Endabschnitt einer vereinfachten Ausführung eines stabförmigen Tragkörpers mit konvexer und konkaver Profilkontur.

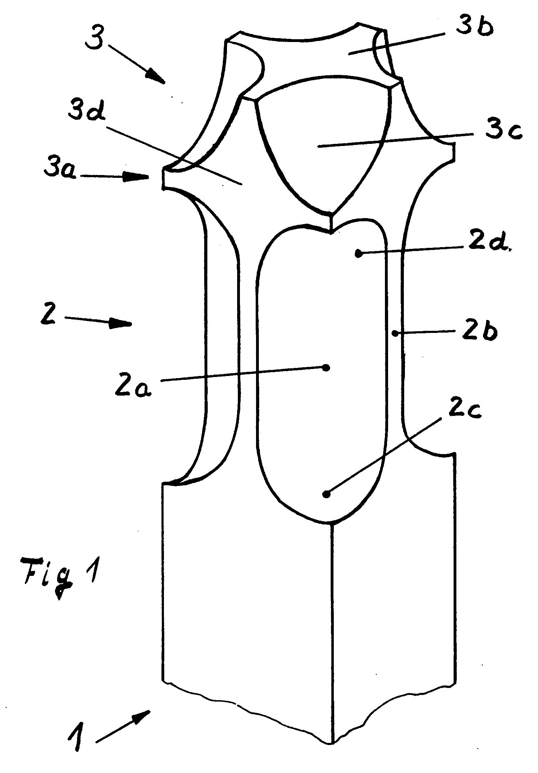

Der in Fig.1 angedeutete Tragkörperbereich umfasst einen ersten, prismatisch ausgebildeten Längsabschnitt 1 mit quadratischem Vollquerschnitt. Dieser Abschnitt hat das innerhalb der gegebenen Seitenabstände des Profilquerschnitts grösstmögliche Widerstandsmoment, d.h. Biegefestigkeit, und erstreckt sich über den nicht dargestellten, im allgemeinen einer maximalen Biegebeanspruchung ausgesetzten Mittelbereich des Tragkörpers. Gegen das Stabende schliesst sich zweiter Längsabschnitt 2 an, der vier symmetrisch über den Umfang verteilte, bogenförmig-konkave Profilabschnitte 2a und dazwischen angeordnete Stege 2b aufweist. Die Scheitel der Profilabschnitte 2a fluchten in Stablängsrichtung gesehen mit den vorspringenden Längskanten des Längsabschnitts 1. Der Übergang zwischen den vorspringenden Kanten des Längsabschnitts 1 und den konkaven Profilabschnitten des Längsabschnitts 2 wird durch Kalotten 2c vermittelt, deren im Stablängsschnitt erscheinende Profilkontur stetig in diejenige der Profilabschnitte 2a übergeht. Es werden so nicht nur abrupte Querschnittsänderungen mit Spannungskonzentrationen im Falle von Biegebelastungen vermieden, sondern auch eine harmonisch wirkende Längsgliederung des Stabes erreicht.

Das Stabende ist als Kopfabschnitt 3 ausgebildet, der in einem sich über den Stabumfang erstreckender Kragen 3a wieder das volle Querschnittsprofil des Längsabschnitts 1 annimmt. Der Übergang zwischen dem Kragen 3a und den konkaven Profilabschnitten 2a des Längsabschnitts 2 einerseits bzw. der Stirnfläche 3b des Stabes andererseits wird wiederum durch Kalotten 2d bzw. 3c vermittelt. Auf diese Weise ergeben sich am Umfang des Kragens im Anschluss an die Stege 2b verbreiterte Flächenabschnitte 3d, die eine dem Querschnittsprofil des Längsabschnitts 2 entsprechende Umrisskontur aufweisen und als Queranschlussflächen (mit hier nicht dargestellten Zentrier- und Verbindungsmitteln) für das knick- und absatzfreie Anfügen von sich rechtwinklig zur Stablängsachse erstreckenden Nachbarbauelementen mit gleichem Anschlussquerschnitt, insbesondere angrenzenden Tragkörpern, dienen können. In gleicher Weise ergibt sich durch die Anordnung der Kalotten 3c auch für die Stirnfläche 3b eine dem Querschnittsprofil des Längsabschnitts 2 entsprechende Umrisskontur, so dass auch hier mit kontinuierlichem Oberflächenverlauf entsprechende Bauelemente angefügt werden können. Insbesondere bietet diese Kopfgestaltung die Möglichkeit, aus bis zu 6 zusammenstossenden stabförmigen Tragkörpern ein Teil- oder Voll-Raumkreuz innerhalb der Rahmenstruktur des Raumgebildes herzustellen.

Fig.2 zeigt eine Raumecke mit einem vertikalen stabförmigen Tragkörper 4 quadratischen Querschnitts und zwei zueinander rechtwinklig anstossenden horizontalen Tragkörpern 5 einerseits sowie 6 und 7 andererseits. Der Tragkörper 5 hat ein Z-förmiges Querschnittsprofil mit zwei einander gegenüberliegenden, konkav-bogenförmigen Konturabschnitten 5a und zwei ebenfalls einander gegenüberliegenden, geradlinigen Konturabschnitten 5b. So ergibt sich ein im wesentlichen rotationssymmetrischer Querschnitt, der eine vielfältige Anwendung in verschiedenen Querschnittsorientierungen ermöglicht. Von besonderem Vorteil ist ferner die an der Profiloberseite gebildete, ebene Auflagefläche, die eine Befestigung von plattenförmigen Bauelementen, wie Tischplatten und dergl., begünstigt. Andererseits bietet das hier als Beispiel gezeigte, Z-artige Gesamtprofil mit seinen Bogenprofilabschnitten eine funktionsgerechte Anordnung von möbelarchitektonisch vielfach angestrebten Hohlkehlen im Randbereich unterhalb solcher Plattenelemente. In diesem Zusammenhand führt eine bezüglich der anstossenden Stabprofile formangepasste Kalotte KA am Tragkörper 4 zu einer glattflächig über die Raumecke durchlaufenden Hohlkehle.

Das Beispiel zeigt ferner die Zusammensetzung eines Z-Profils aus zwei aneinanderliegend befestigten L-Profilen mit zwei zueinander im Winkel angeordneten geradlinigen Konturabschnitten und einem konkav-bogenförmigen Konturabschnitt. Für die vorgenannten Zwecke lassen sich solche L-Profile allein ebenfalls verwenden, und zwar mit dem besonderen Vorteil verminderten Aufwandes. Sinngemäss entsprechendes gilt auch für nicht näher dargestellte Varianten mit T- und I-förmigem Profil.

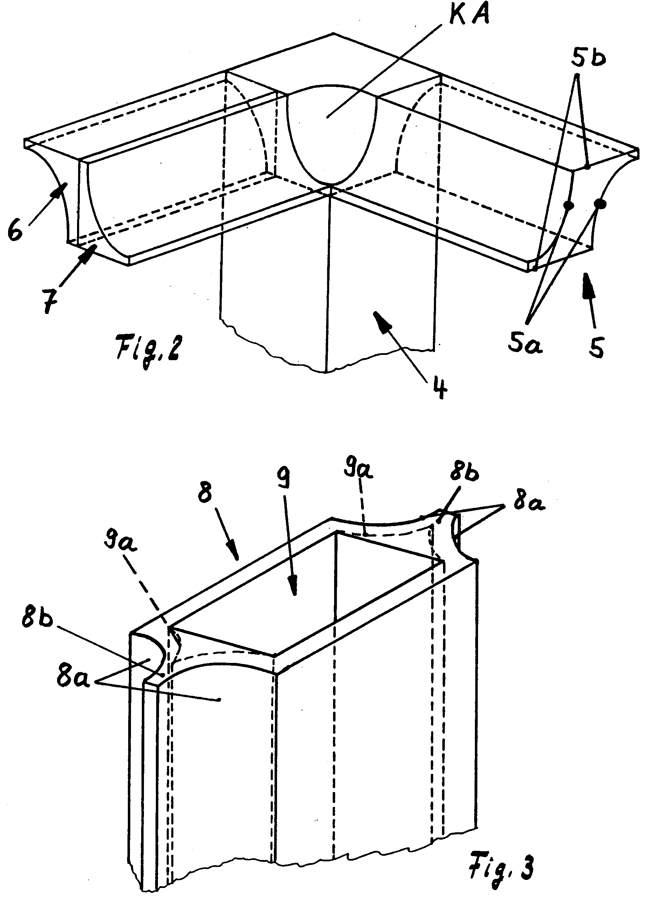

Fig.3 zeigt das Beispiel eines Hohlprofil-Tragkörpers 8 mit zwei am Profilumfang nebeneinaderliegend angeordneten, konkav-bogenförmigen Profilabschnitten 8a, die einen dazwischen angeordneten Steg 8b mit sich tangential zum Profilumfang erstreckender Scheitelfläche bilden. Die vorgenannten architektonischen Vorteile sind hier mit den hohen Festigkeitswerten eines Hohlkörpers vereinigt. Strichliert ist ferner eine Variante mit einer Profilkontur des Hohlraumes 9 mit konvex-bogenförmigen Abschnitten 9a angedeutet, die parallel zu den Aussenkonturabschnitten 8a verlaufen und eine im wesentlichen konstante Wandstärke des Hohlprofils ergeben.

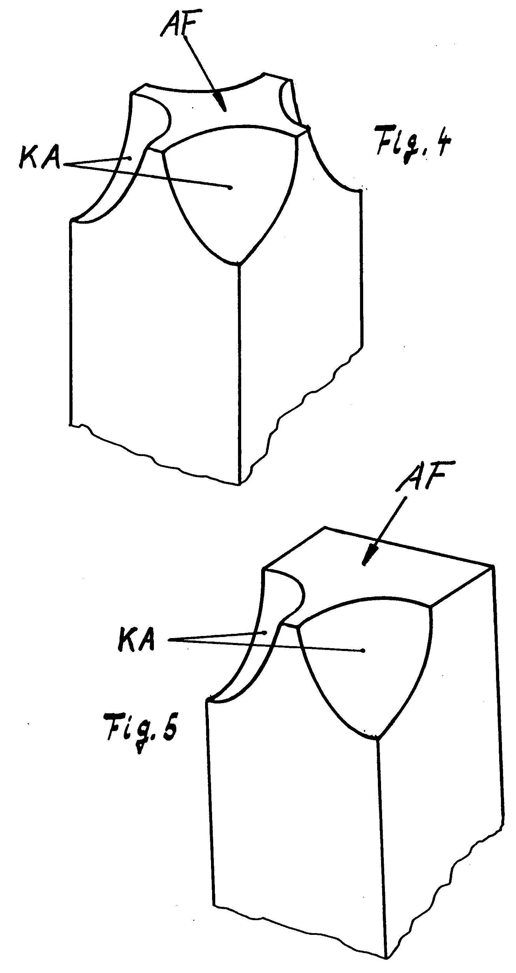

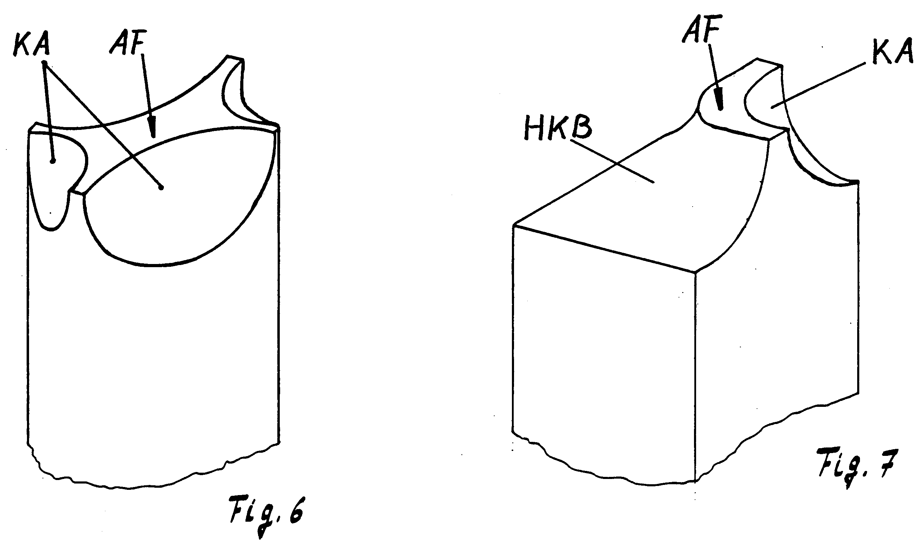

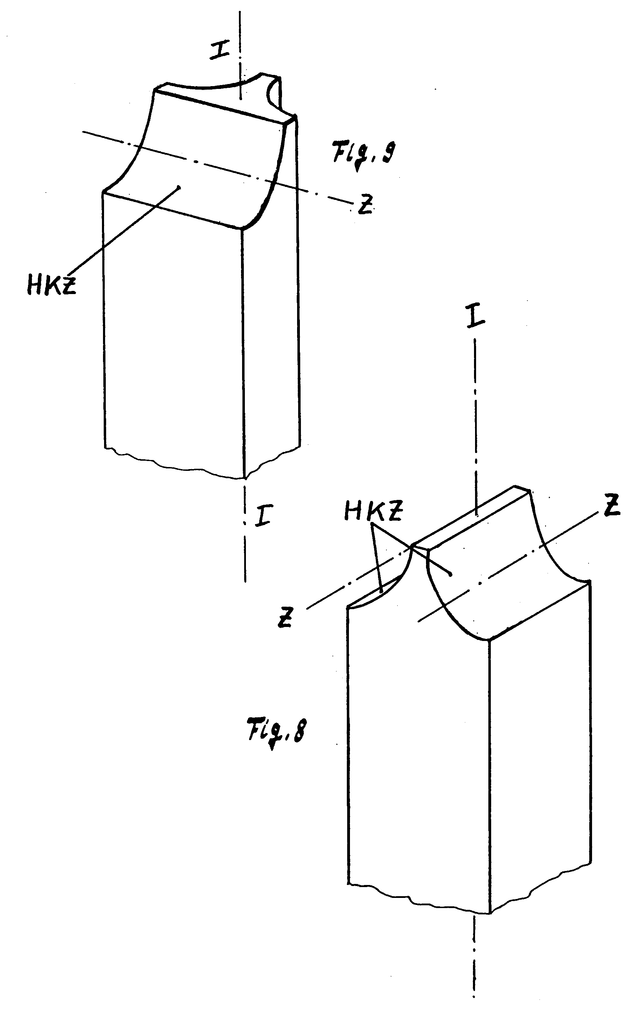

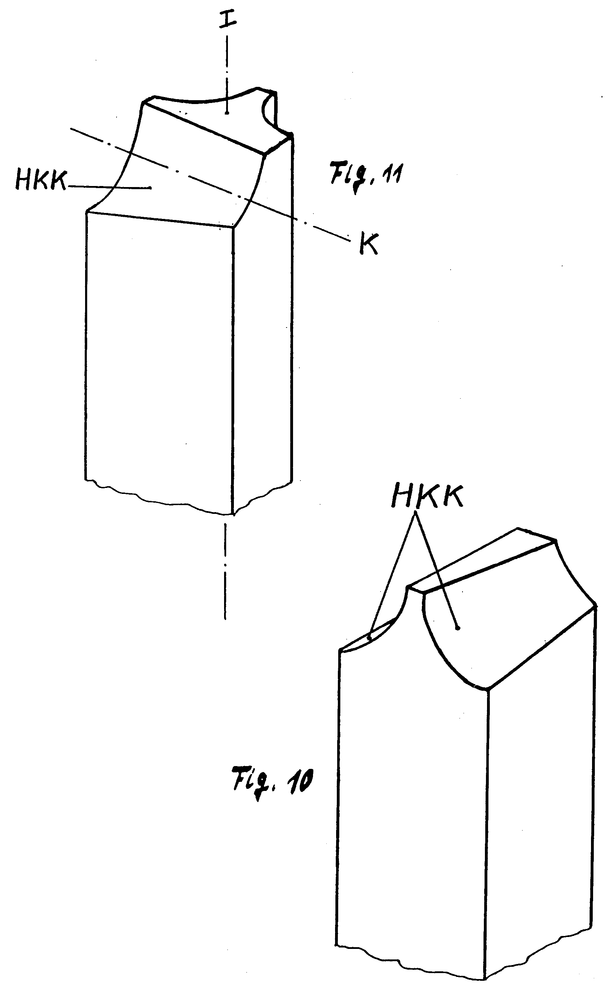

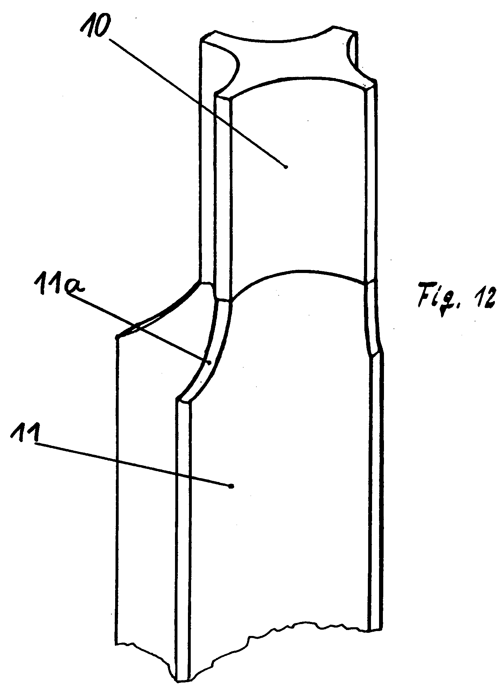

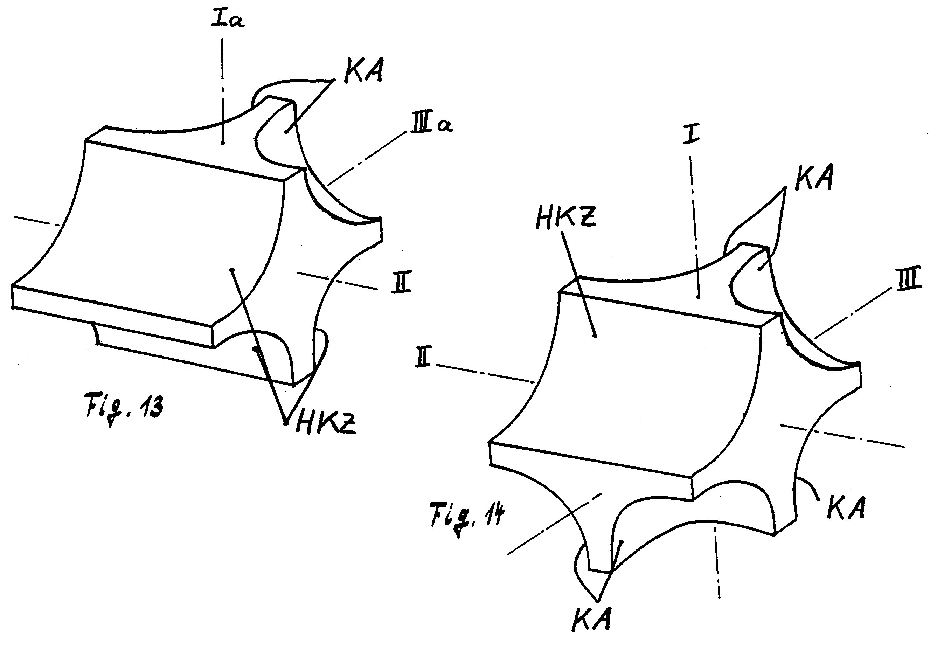

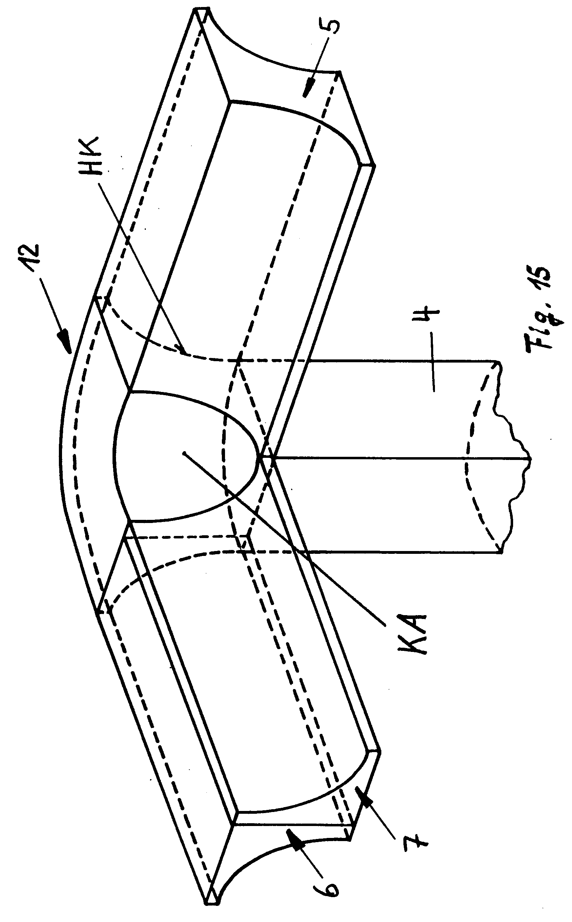

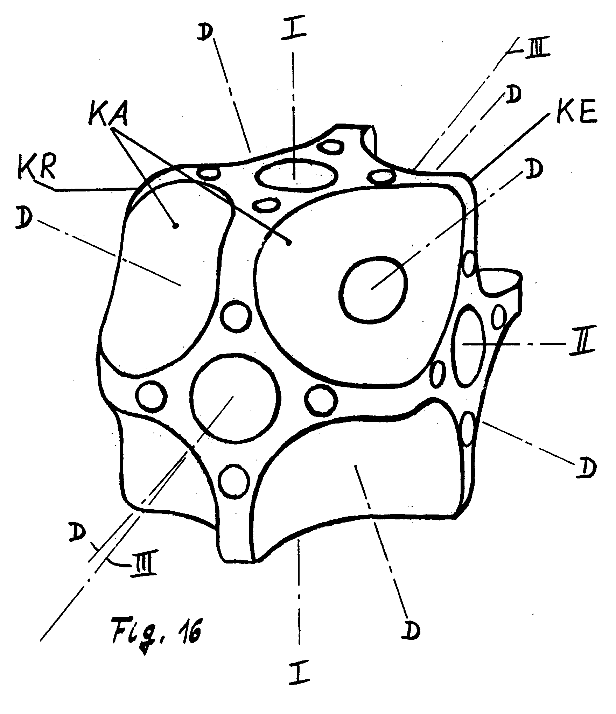

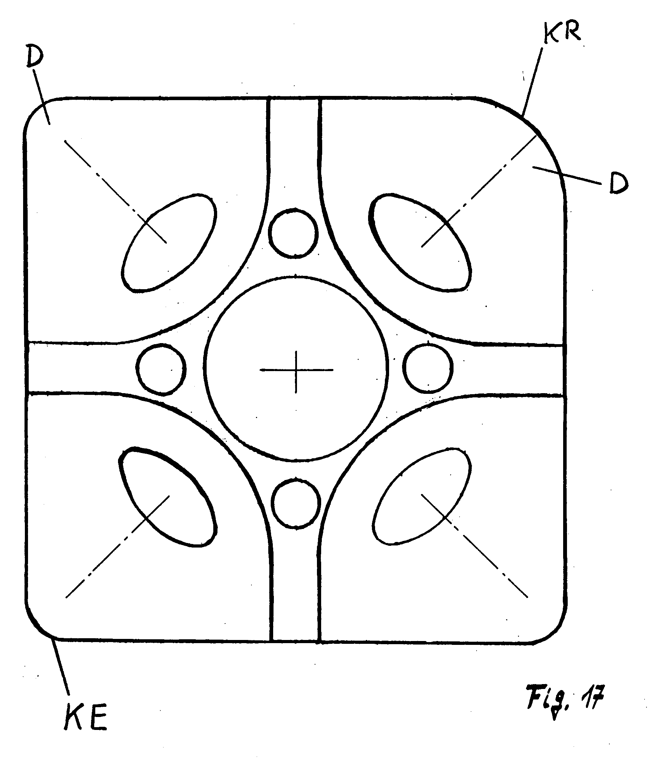

In den Figuren 4 bis 7 sind verschiedene Varianten von Vollprofil-Tragkörpern gezeigt, bei denen das Stabende unter Bildung einer dem Querschnitt von Nachbarelementen angepassten Anschlussfläche AF durch eine am Stabumfang angeordnete, Kalotte KA bzw. mehrere derselben im Querschnitt verjüngt ausgebildet ist. Dies ermöglicht - durch geeignete Kombination von einander diametral gegenüberliegenden bzw. nebeneinanderliegenden Kalotten mit Bildung von Eckvorsprüngen - einen formharmonischen Profilübergang zwischen verschiedenartigen Tragkörpern ohne besondere Anschluss- oder Übergangselemente. Besonders ist auf die Ausführungen nach Fig.6 mit einem Rundstab-Tragkörper sowie nach Fig.7 mit Kombination von Kalotte KA und Hohlkehle HKB hinzuweisen, die einen harmonischen Profilübergang auch für extrem verschiedenartige Konturtypen ermöglichen.

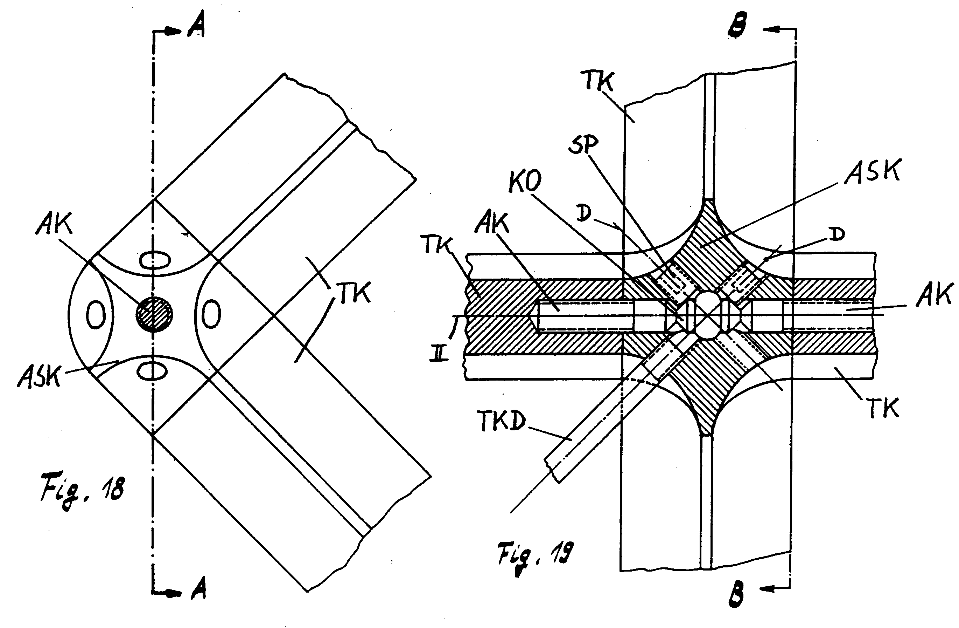

Die Beispiele gemäss Figuren 8 bis 10 zeigen Tragkörper-Endabschnitte mit allgemein-zylindrischen bzw. -kegelförmigen Hohlkehlenabschnitten HKZ bzw. HKK, deren Generatrix bzw. - im Falle von rotationssymmetrischen Formen - Zylinderachse Z oder Kegelachse K im Winkel, insbesondere rechtwinklig zur Stabachse I angeordnet ist. Es versteht sich, dass hier auch pyramidenförmige Hilfsflächen in Betracht kommen.

Solche Hilfsflächen ermöglichen die Bildung von durchlaufenden Hohlkehlen an Kreuzungs- und Eckpartien innerhalb einer Rahmenstruktur, gegebenenfalls mit Übergang zwischen unterschiedlich tiefen Profileinbuchtungen, und können auch als seitliche Anlage- oder Aschlussflächen für die formschlüssige Verbindung von Tragkörpern dienen.

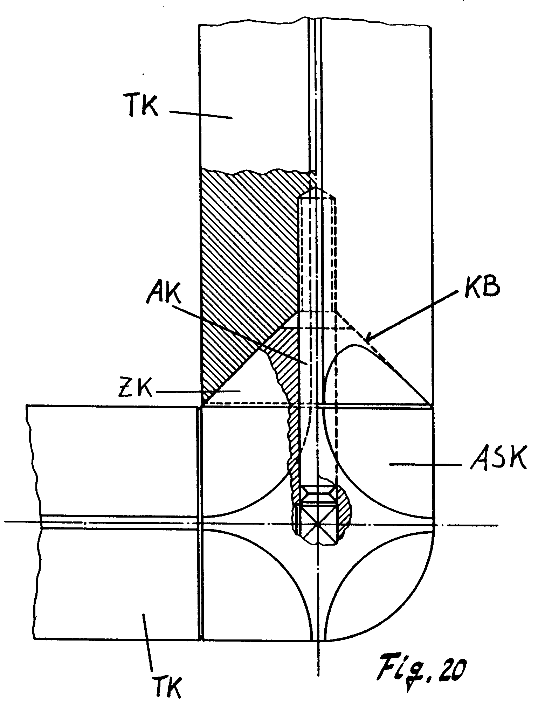

Fig.12 zeigt ein allgemein-zylindrisch begrenztes Bauelement 10 mit kreuzartigem Profil in Verbindung mit einem achsparallel, seitlich versetzt angeordneten Tragkörper 11 von ähnlicher, jedoch vergrösserter Profilform. Der Stabendabschnitt 11a ist an den vorspringenden Profilrippen durch konkav-bogenförmige Abschnitte verjüngt ausgebildet, so dass sich trotz extremer Profildifferenzen ein harmonischer und im stetigähnlicher Formübergang ergibt.

In den Figuren 13 und 14 sind Anschlusselemente mit rotationssymmetrisch, nämlich zylindrisch ausgebildeten Übergangs- oder Anschlussflächen für angrenzende Tragkörper oder sonstige Bauelemente in Form von Hohlkehlen HKZ dargestellt. Gemäss Fig.13 erstrecken sich zwei Hohlkehlen rechtwinklig zu Halb-Anschlussachsen Ia und IIIa, die einen einseitigen Anschluss benachbarter Bauelemente ermöglichen, sowie parallel zu einer Voll-Anschlussachse II für zweiseitigen Anschluss. Auf diese Weise lassen sich bequem T-förmige wie auch kreuzförmige Tragkörperverbindungen herstellen. Zufolge Fig.14 sind drei zueinander rechtwinklige Voll-Anschlussachsen I, II und III mit einer zur Achse II parallelen Hohlkehle vorgesehen. Den Anschlussachsen zugeordnete, stirnseitige Anschlussflächen mit bezüglich der zugeordneten Tragkörper formangepasster Umrisskontur werden durch die Stirnkanten der Hohlkehlen sowie von zusätzlich eingeformten Kalotten KA gebildet.

Fig.15 zeigt eine Rahmen-Raumecke ähnlich Fig.2 (entsprechende Elemente sind übereinstimmend bezeichnet), jedoch mit einem Eck-Anschlusselement 12, das ausser der Kalotte KA eine gegenüberliegende, konvex vorspringende Hohlkehle HK mit sattelförmiger, vorzugsweise wenigstens über einen Teil ihrer Bogenerstreckung rotationssymmetrischer Oberfläche aufweist. Auf diese Weise lassen sich Anschlüsse der vorliegenden Art mit vergleichsweise geringem aufwand herstellen.

In Figuren 16 und 17 ist ein Anschlusselement mit Kalotten KA und rippenartigen Eckvorsprüngen KE vergleichsweise starker Konturkrümmung dargestellt. Dadurch ergeben sich formangepasste Anschlussflächen für Voll-Anschlussachsen I und III sowie für eine Halb-Anschlussachse II. An der letzterer gegenüberliegenden Stirnfläche des Anschlusselementes ist ein Eckvorsprung KR geringerer Konturkrümmung als äusserer Formabschluss vorgesehen. Die Besonderheit dieser Ausführung besteht in zusätzlichen Diagonal-Anschlussachsen D mit entsprechenden Anschlussbohrungen, die als Zentrierelemente und in Form von Gewindebohrungen gegebenenfalls auch für Befestigungszwecke dienen. Die Diagonalachsen sind unter einem spitzen Winkel von vorzusweise etwa 45° gegen die Ebenen der Hauptachsen I, II, III angeordnet.

Die Figuren 18 und 19 zeigen eine Rahmen-Raumecke mit zusammenstossenden Tragkörpern TK und einem Eck-Anschlusselement ASK, das ähnlich Fig.16 und 17 ausgebildet und mit Diagonal-Anschlussachsen D versehen ist. Zusätzlich ist das Anschusselement mit einer Verbindungsvorrichtung versehen. Diese umfasst koaxial zu den Haupt-Anschlussachsen (hier nur dargestellt für die Hauptachse II) in die Enden der anstossenden Tragkörper eingeschraubte Ankerbolzen AK mit hinterschnittenen Kopfabschnitten KO sowie als Spannvorrichtung zugehörige Druck-Gewindebolzen SP, die in Diagonalbohrungen entsprechend den Achsen D eingeschraubt sind und mit ihren Stirnflächen an den Hinterschneidungen der Ankerbolzen-Kopfabschnitte KO angreifen.

Ausserdem ist in Fig.19 der Anschluss eines Verstrebungstragkörpers TKD in eine der Diagonal-Gewindebohrungen angedeutet.

Fig.20 zeigt eine Rahmen-Raumecke ähnlich den Figuren 18 und 19, ebenfalls mit einer Spann-Befestigungsvorrichtung, wobei jedoch das Anschlusselement ASK mit Zentrierkegelansätzen ZK versehen ist, die eine entsprechende Kegelbohrungen KB der anstossenden Tragkörper TK eingreifen und für eine genau koaxiale Zentrierung sowie für besonders tragfähige Anschlussverbindung sorgen.

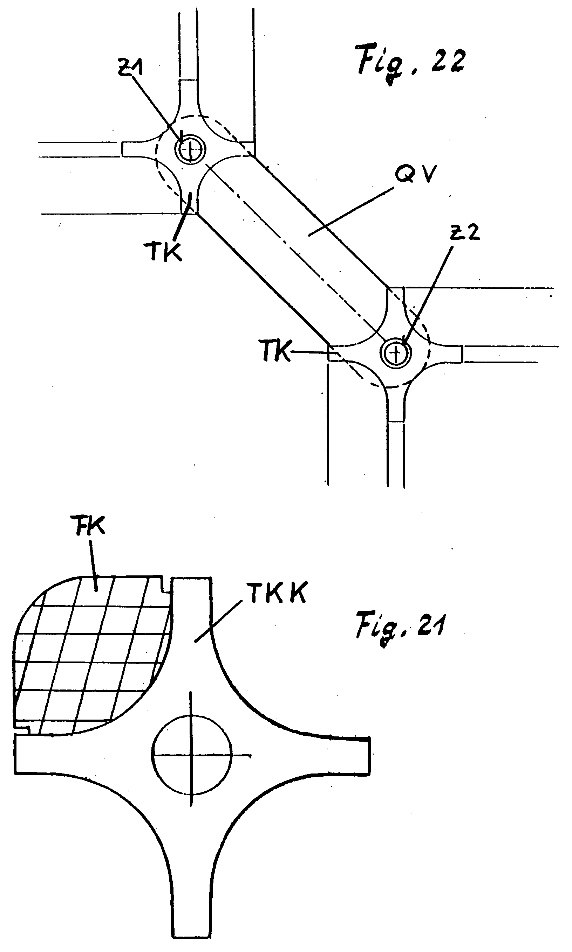

Aus Fig.21 ist der Querschnitt eines Kreuzprofil-Tragkörpers TKK mit konkav-bogenförmigen Profilflanken ersichtlich. In eine der Profilausnehmungen ist ein stabförmiger Füllkörper FK eingesetzt, der einerseits einen dem Tragkörperprofil angepassten, konvex-bogenförmigen Profilabschnitt und andererseits einen Aussenprofilabschnitt mit hinsichtlich des Einsatzes an Möbelkanten funktionsgerechter Rundung aufweist.

Fig.22 zeigt als Zubehör für erfindungsgemässe Bauteilsätze ein laschenartiges Querverbindungselement QV für die Endabschnitte von parallelen, gegenseitig beabstandeten Stab-Tragkörpern TK. Z.B. zapfenförmige Zentrierelemente Z1 der letzteren stehen in Formschlussverbindung mit komplementären Zentrierelementen Z2 des Querverbindungselementes.

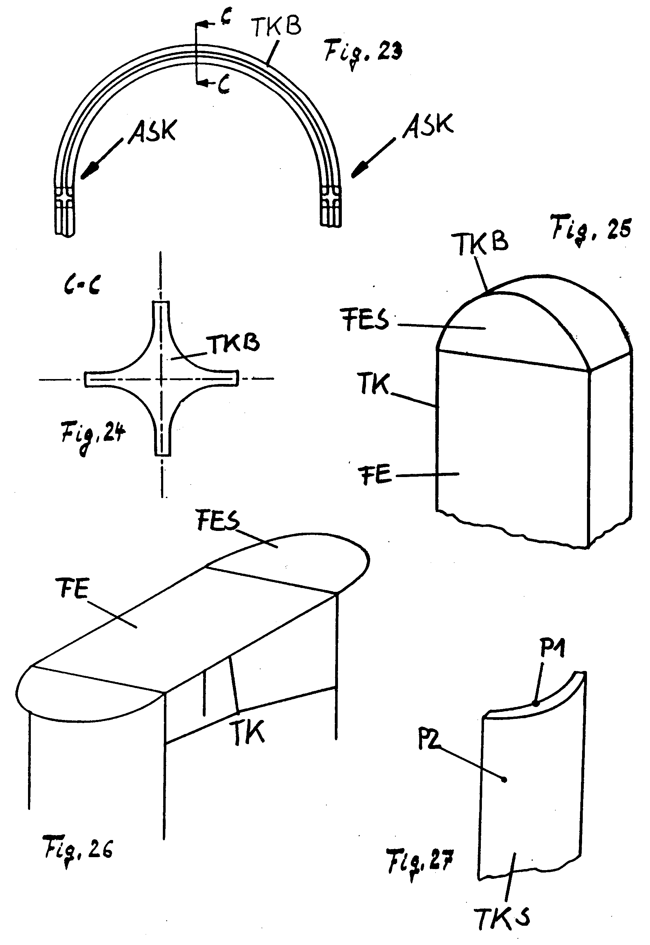

Der aus Figuren 23 und 24 ersichtliche Kreuzprofil-Tragkörper TKB weist eine kreisbogenförmig verlaufende Stabachse auf. Auch hier können an den Tragkörperenden Kreuz-Anschlusselemente ASK für die Bildung von vielfältigen Knotenkonstruktionen angefügt werden.

Die Figuren 25 und 26 zeigen in stark vereinfachter Darstellung Beispiele von Bauteilsätzen für Möbelkörper mit tragender Rahmenstruktur, die aus geradlinigen bzw. bogenförmigen Stab-Tragkörpern TK bzw. TKB mit entsprechenden, nicht dargestellten Anschlusselementen und Verbindungsvorrichtungen sowie besteht. Ausserdem sind innerhalb der durch die Tragkörper gebildeten Rahmenfelder rechteckige bzw. kreissegmentartige, plattenförmige Füllelemente FE bzw. FES angeordnet.

Endlich zeigt Fig.27 einen insbesondere für die Kantenbildung und Randbegrenzung an Möbelaussenflächen geeigneten Stab-Tragkörper TKS, mit dem Vorteil geringen Herstellungsaufwandes als langgestrecktes Zylindersegment mit zueinander parallel verlaufenden, kreisbogenförmigen Profilkonturabschnitten P1 und P2 ausgebildet ist. Zweckmässig erstreckt sich der Kreisringquerschnitt eines solchen Tragkörpers über etwa 90°.

## Patentansprüche

1. Stabförmiger Tragkörper für rahmenartige Flächen- oder Raumgebilde, der ein Querschnitts-Aussenprofil mit mindestens einem konkaven Abschnitt aufweist, dadurch gekennzeichnet, dass mindestens zwei in Stablängsrichtung gegeneinander versetzte Längsabschnitte unterschiedlicher Form vorgesehen sind, dass an wenigstens einem dieser Längsabschnitte (2, 3, 10, 11, AF, KA, HKZ, HKK) mindestens ein bogenförmig-konkaver Konturabschnitt vorgesehen ist und dass die Längsabschnitte einstückig, stoffschlüssig oder formschlüssig miteinander verbunden sind.

2. Tragkörper nach Anspruch 1, gekennzeichnet durch mindestens einen ersten Längsabschnitt (1, 4) mit wenigstens teilweise geradlinig oder konvex gekrümmt begrenztem Querschnitts-Aussenprofil und wenigstens einen zweiten, gegen den ersten in Stablängsrichtung versetzten Längsabschnitt (2, 3, AF, KA, HKZ, HKK) mit mindestens teilweise konkav begrenztem Querschnitts-Aussenprofil.

3. Tragkörper nach Anspruch 2, dadurch gekennzeichnet, dass zwischen einer abschnittsweise ebenen oder konvex gekrümmten Profilaussenfläche eines ersten Längsabschnitts (1, 3a) und einer konkaven Profilaussenfläche eines benachbarten zweiten Längsabschnitts (2) ein mit Kalotten versehener Uebergangsabschnitt (2c, 2d) gebildet ist.

4. Tragkörper nach Anspruch 3, dadurch gekennzeichnet, dass sich der Uebergangsabschnitt (2c, 2d) absatzfrei, vorzugsweise auch wenigstens annähernd knickfrei, an die Profilaussenfläche des zugeordneten zweiten Längsabschnitts (2) anschliesst.

5. Tragkörper nach einem der vorangehenden Ansprüche, dadurch gekennzeichnet, dass wenigstens ein zweiter Längsabschnitt (3) in einem Endbereich des Tragkörpers angeordnet ist.

6. Tragkörper nach einem der vorangehenden Ansprüche, gekennzeichnet durch eine Querschnitts-Profilkontur mit wenigstens zwei Abschnitten (5a, 5b) unterschiedlicher Krümmung, insbesondere mindestens einem geradlinigen und mindestens einem konkav oder konvex gekrümmten Konturabschnitt, vorzugsweise in L-, T-, I- oder Z-förmiger Anordnung.

7. Tragkörper nach einem der vorangehenden Ansprüche, gekennzeichnet durch zwei am Profilumfang nebeneinanderliegend angeordnete, konkav-bogenförmige Profilabschnitte (2a), die einen dazwischen angeordneten Steg (2b) mit sich tangential zum Profilumfang erstreckender Scheitelfläche bilden.

8. Tragkörper nach einem der vorangehenden Ansprüche, gekennzeichnet durch eine als Kreisringsektor (P1) ausgebildete Querschnittsform.

9. Tragkörper nach Anspruch 8, dadurch gekennzeichnet, dass sich der Kreisringsektor des Querschnittsprofils über einen Umfangswinkel von wenigstens annähernd 90° erstreckt.

10. Tragkörper nach einem der vorangehenden Ansprüche, dadurch gekennzeichnet, dass wenigstens ein Stabende durch mindestens einen am Stabumfang angeordneten, kalottenförmigen Oberflächenabschnitt im Querschnitt (KA) verjüngt ausgebildet ist.

11. Tragkörper nach Anspruch 10, gekennzeichnet durch mindestens ein Paar von einander am Umfang des Stabendes diametral gegenüberliegenden Kalottenflächen (KA).

12. Tragkörper nach Anspruch 10 oder 11, gekennzeichnet durch mindestens ein Paar von am Umfang des Stabendes unter Bildung eines Eckvorsprunges nebeneinanderliegend angeordneten Kalottenflächen (KA).

13. Tragkörper nach einem der Ansprüche 10 bis 12, dadurch gekennzeichnet, dass sich an das mit mindestens einer Kalottenfläche (KA) versehene Stabende ein im Querschnitt polygonaler, prismatischer Stababschnitt (4) anschliesst.

14. Tragkörper nach einem der Ansprüche 10 bis 13, dadurch gekennzeichnet, dass sich an das mit mindestens einer Kalottenfläche versehene Stabende ein Stababschnitt mit rundem, insbesondere kreisrundem Querschnittsprofil anschliesst.

15. Tragkörper nach einem der vorangehenden Ansprüche, dadurch gekennzeichnet, dass an wenigstens einem Stabende ein allgemein-zylindrischer oder polygonal-prismatischer Oberflächenabschnitt (HKZ) mit im Winkel, insbesondere quer zur Stabachse (I) angeordneter Generatrix (Z) vorgesehen ist.

16. Tragkörper nach einem der vorangehenden Ansprüche, dadurch gekennzeichnet, dass an wenigstens einem Stabende ein allgemein-kegelförmiger oder -pyramidenförmiger Oberflächenabschnitt (HKK) mit im Winkel, insbesondere quer zur Stablängsachse angeordneter Kegel- bzw. Pyramidenachse vorgesehen ist.

17. Tragkörper nach einem der vorangehenden Ansprüche, dadurch gekennzeichnet, dass die Stablängsachse einen wenigstens abschnittsweise gekrümmten Verlauf aufweist.

18. Bauteilsatz für rahmenartige Flächen- oder Raumgebilde, gekennzeichnet durch die Kombination folgender Merkmale:
a) es ist eine Mehrzahl von stabförmige Tragkörpern (TK) vorhanden, die innerhalb des Flächen- oder Raumgebildes zur Bildung wenigstens einer Randbegrenzung mindestens eines Rahmenfeldes vorgesehen sind und von denen mindestens einer wenigstens zwei in Stablängsrichtung gegeneinander versetzte Längsabschnitte unterschiedlicher Form sowie an wenigstens einem dieser Längsabschnitte (2, 3, 10, 11, AF, KA, HKZ, HKK) mindestens einen bogenförmig-konkaven Konturabschnitt aufweist;
b) es ist wenigstens ein Anschlusselement (ASK) vorhanden, das für die Herstellung eines Profilüberganges zwischen benachbarten Tragkörpern vorgesehen ist, die mit ihren Längsachsen (I, II, III) im Winkel zueinander angeordnet sind und/oder unterschiedliches Querschnittsprofil aufweisen;
c) es ist mindestens eine Verbindungsvorrichtung vorhanden, die für die Herstellung einer vorzugsweise lösbaren Formschlussverbindung zwischen benachbarten Tragkörpern bzw. zwischen mindestens einem Tragkörper und einem Anschlusselement vorgesehen ist;
d) das Anschlusselement (ASK) weist wenigstens eine mindestens teilweise rotationssymmetrisch ausgebildete Uebergangsfläche (KA) sowie mindestens eine angrenzende Anschlussfläche für einen zugeordneten Tragkörper (TK) auf, wobei die Uebergangsfläche (KA) eine im Winkel zu der Stabachse (I, II, III) eines anstossenden Tragkörpers (TK) angeordnete Symmetrieachse (D) aufweist und mit der Anschlussfläche eine der Stirnseite des zugeordneten Tragkörpers angepasste Konturkante bildet.

19. Bauteilsatz nach Anspruch 18, gekennzeichnet durch ein Anschlusselement mit wenigstens einer konkav-zylinderförmigen Uebergangsfläche (HKZ).

20. Bauteilsatz nach Anspruch 18 oder 19, gekennzeichnet durch ein Anschlusselement mit wenigstens einer konvex-rotations-symmetrischen, nach Art einer Hohlkehle (HK) ausgebildeten Uebergangsfläche (KA).

21. Bauteilsatz für rahmenartige Flächen- oder Raumgebilde, gekennzeichnet durch die Kombination folgender Merkmale, die insbesondere auch mit einem oder mehreren Merkmalen der Ansprüche 18 bis 20 kombiniert anwendbar sind:
a) es ist eine Mehrzahl von stabförmige Tragkörpern (TK) vorhanden, die innerhalb des Flächen- oder Raumgebildes zur Bildung wenigstens einer Randbegrenzung mindestens eines Rahmenfeldes vorgesehen sind und von denen mindestens einer wenigstens zwei in Stablängsrichtung gegeneinander versetzte Längsabschnitte unterschiedlicher Form sowie an wenigstens einem dieser Längsabschnitte (2, 3, 10, 11, AF, KA, HKZ, HKK) mindestens einen bogenförmig-konkaven Konturabschnitt aufweist;
b) es ist wenigstens ein Anschlusselement (ASK) vorhanden, das für die Herstellung eines Profilüberganges zwischen benachbarten Tragkörpern vorgesehen ist, die mit ihren Längsachsen (I, II, III) im Winkel zueinander angeordnet sind und/oder unterschiedliches Querschnittsprofil aufweisen;
c) es ist mindestens eine Verbindungsvorrichtung für die Herstellung einer vorzugsweise lösbaren Formschlussverbindung zwischen benachbarten Tragkörpern bzw. zwischen mindestens einem Tragkörper und einem Anschlusselement vorgesehen.

22. Bauteilsatz nach Anspruch 21, dadurch gekennzeichnet, dass das Anschlusselement (ASK) mindestens ein Paar von zueinander entgegengesetzt angeordneten Uebergangsflächen aufweist, von denen eine wenigstens teilweise konkav und die andere wenigstens teilweise konvex gekrümmt ausgebildet ist.

23. Bauteilsatz nach Anspruch 22, dadurch gekennzeichnet, dass die zueinander entgegengesetzt angeordneten Uebergangsflächen als wenigstens annähernd koaxiale Rotationsflächen ausgebildet sind.

24. Bauteilsatz für rahmenartige Flächen- oder Raumgebilde, mit Tragkörpern nach Anspruch 7, gekennzeichnet durch die Kombination folgender Merkmale, die insbesondere auch mit einem oder mehreren Merkmalen der Ansprüche 18 bis 23 kombiniert anwendbar sind:
a) es ist eine Mehrzahl von stabförmigen Tragkörpern (TK) vorhanden, die innerhalb des Flächen- oder Raumgebildes zur Bildung von Randbegrenzungen mindestens eines Rahmenfeldes vorgesehen sind;
b) es ist wenigstens ein Anschlusselement (ASK) vorhanden, das für die Herstellung eines Profilüberganges zwischen benachbarten Tragkörpern vorgesehen ist, die mit ihren Längsachsen (I, II, III) im Winkel zueinander angeordnet sind und/oder unterschiedliches Querschnittsprofil aufweisen;
c) es ist mindestens eine Verbindungsvorrichtung für die Herstellung einer vorzugsweise lösbaren Formschlussverbindung zwischen benachbarten Tragkörpern bzw. zwischen mindestens einem Tragkörper und einem Anschlusselement vorgesehen;
d) es sind mindestens zwei stabförmige Tragelemente (6, 7) nach Anspruch 7 vorgesehen, die mit zwei wenigstens teilweise ebenen Längsseits-Oberflächen aneinanderliegend sowie mit im Querschnitt aussenliegenden, konkav-bogenförmigen Profilbereichen angeordnet, insbesondere miteinander verbunden sind.

25. Bauteilsatz nach Anspruch 24, dadurch gekennzeichnet, dass die konkav-bogenförmigen Profilabschnitte im Querschnitt zueinander diametral angeordnet sind.

26. Bauteilsatz nach einem der Ansprüche 18 bis 25, gekennzeichnet durch mindestens zwei stabförmige Tragkörper (TK), die an wenigstens einem Ende je ein erstes Zentrierelemente aufweisen, und dass mindestens ein laschenartiges Querverbindungselement (QV) für mit gegenseitigem Abstand angeordnete Tragkörperenden vorgesehen ist, wobei das Querverbindungs- element zwei in Laschenlängsrichtung mit entsprechendem Abstand angeordnete, zu den ersten Zentrierelementen komplementäre zweite Zentrierelemente aufweist.

27. Bauteilsatz nach einem der Ansprüche 18 bis 26, dadurch gekennzeichnet, dass mindestens ein stabförmiger Tragkörper (TKK) vorhanden ist, der auf wenigstens einem Teil seiner Länge eine Querschnittsform mit mindestens einem konkaven Aussenprofilabschnitt aufweist, und dass mindestens ein stabförmiges Füllelement (FK) mit zu dem konkaven Aussenprofilabschnitt wenigstens teilweise komplementärer Aussenprofilform vorgesehen ist.

28. Anschlusselement zur Verbindung der Endabschnitte von stabförmigen Tragkörpern, von denen wenigstens einer mindestens zwei in Stablängsrichtung gegeneinander versetzte Längsabschnitte unterschiedlicher Form sowie an wenigstens einem dieser Längsabschnitte mindestens einen bogenförmigkonkaven Konturabschnitt aufweist und der im Bereich mindestens eines Endabschnitts vorzugsweise prismatisch oder allgemein-zylindrisch ausgebildet ist, dadurch gekennzeichnet, dass das Anschlusselement mindestens zwei, vorzugsweise zueinander im Winkel angeordnete Anschlussachsen (I, II, III) sowie mindestens einen prismatischen oder allgemeinzylindrischen Oberflächenabschnitt (HKZ) mit vorzugsweise parallel zu einer Anschlussachse angeordneter Generatrix aufweist.

29. Anschlusselement zur Verbindung der Endabschnitte von stabförmigen Tragkörpern, von denen wenigstens einer mindestens zwei in Stablängsrichtung gegeneinander versetzte Längsabschnitte unterschiedlicher Form sowie an wenigstens einem dieser Längsabschnitte mindestens einen bogenförmigkonkaven Konturabschnitt aufweist und der im Bereich mindestens eines Endabschnitts vorzugsweise prismatisch oder allgemein-zylindrisch ausgebildet ist, gekennzeichnet durch folgende Merkmale, die insbesondere auch mit einem oder mehreren Merkmalen des Anspruchs 28 kombiniert anwendbar sind:
das Anschlusselement hat mindestens zwei, vorzugsweise zueinander im Winkel angeordnete Anschlussachsen sowie mindestens einen allgemein-kegelförmigen oder -pyramidenförmigen Oberflächenabschnitt mit vorzugsweise parallel zu einer Anschlussachse angeordneter Kegel- bzw. Pyramidenachse.

30. Anschlusselement, zur Verbindung der Endabschnitte von stabförmigen Tragkörpern, von denen wenigstens einer mindestens zwei in Stablängsrichtung gegeneinander versetzte Längsabschnitte unterschiedlicher Form sowie an wenigstens einem dieser Längsabschnitte mindestens einen bogenförmigkonkaven Konturabschnitt aufweist und der im Bereich mindestens eines Endabschnitts vorzugsweise prismatisch oder allgemein-zylindrisch ausgebildet ist, gekennzeichnet durch folgende Merkmale, die insbesondere auch mit einem oder mehreren Merkmalen der Ansprüche 28 und 29 kombiniert anwendbar sind:
das Anschlusselement hat mindestens zwei zueinander im Winkel, vorzugsweise rechtwinklig angeordnete erste Anschlussachsen (I, III) sowie für jede derselben mindestens eine Anschlussfläche, die dem Endabschnitt eines stabförmigen Tragkörpers zugeordnet ist und ein entsprechendes Verbindungselement aufweist, dass mindestens eine zweite Anschlussachse (D) mit wenigstens einem in dieser Achse wirkenden Verbindungselement vorgesehen ist und dass die zweite Anschlussachse (D) unter einem Winkel von weniger als 90° bezüglich jeder der beiden ersten Anschlussachsen (I, III) bzw. bezüglich einer zu den beiden ersten Anschlussachsen parallelen Ebene angeordnet ist.

31. Anschlusselement nach Anspruch 30, dadurch gekennzeichnet, dass die zweite Anschlussachse (D) unter einem Winkel von wenigstens annähernd 45° bezüglich einer der beiden ersten Anschlussachsen (I, III) und/oder bezüglich einer zu den beiden ersten Anschlussachsen parallelen Ebene angeordnet ist.

32. Verbindungsvorrichtung für stabförmige Tragkörper, gekennzeichnet durch die Kombination folgender Merkmale:
a) die Tragkörper umfassen mindestens zwei in Stablängsrichtung gegeneinander versetzte Längsabschnitte unterschiedlicher Form sowie an wenigstens einem dieser Längsabschnitte mindestens einen bogenförmig-konkaven Konturabschnitt;
b) es ist ein Anschlusskörper (ASK) mit wenigstens einer Anschlussfläche vorgesehen, die bezüglich eines anzuschliessenden Stabkörper-Endabschnitts formangepasst ausgebildet ist;
c) es ist ein im Bereich der Anschlussfläche im Anschlusskörper angeordnetes und mit dem anzuschliessenden Stabkörper-Endabschnitt in Wirkverbindung stehendes, zugkraftübertragendes Ankerglied (AK) vorgesehen, dessen Wirkachse wenigstens annähernd der Stabachse (II) anzuschliessenden Tragkörpers (TK) entspricht;
d) es ist eine am Ankerglied (AK) in Zugkraftrichtung desselben angreifende Spannvorrichtung zur Bildung einer unter Vorspannung stehenden Formschlussverbindung zwischen Tragkörper (TK) und Anschlusskörper (AK) vorgesehen;
e) die Spannvorrichtung weist ein Schraubglied (SP) auf, dessen Wirkungsachse einen Winkel von weniger als 90°, vorzugsweise einen spitzen Winkel, insbesondere von etwa 45° mit der Wiekungsachse des Ankergliedes bildet und das zur Herstellung der Formschlussverbindung zwischen Tragkörper und Anschlusskörper mit dem Ankerglied in druckkraftübertragende Wirkverbindung tritt.

33. Verbindungsvorrichtung nach Anspruch 32, dadurch gekennzeichnet, dass das Ankerglied (AK) als über eine Stirnfläche des anzuschliessenden Tragkörpers (TK) vorstehender Zugbolzen mit einem eine Hinterschneidung aufweisenden Kopfabschnitt (KO) ausgebildet ist und dass das Schraubglied (SP) in der Schliessstellung der Spannvorrichtung stirnseitig an der Hinterschneidung des Ankergliedes angreift.

34. Rahmenartiges Flächen- oder Raumgebilde mit stabförmigen Tragkörpern, dadurch gekennzeichnet, dass mindestens ein Rahmenfeld vorgesehen ist, dessen Begrenzung wenigstens zwei Tragkörper gebildet sind, die mindestens zwei in Stablängsrichtung gegeneinander versetzte Längsabschnitte unterschiedlicher Form sowie an wenigstens einem dieser Längsabschnitte mindestens einen bogenförmig-konkaven Konturabschnitt aufweisen, und dass in dem Rahmenfeld mindestens zwei mit ihren jeweils benachbarten Endabschnitten im wesentlichen fluchtende Tragkörper unterschiedlicher Querschnittsform vorgesehen sind.

35. Rahmenartiges Flächen- oder Raumgebilde nach Anspruch 34, dadurch gekennzeichnet, dass die Längsachse mindestens eines stabförmigen Tragkörpers einen bogenförmigen Verlauf aufweist.

## Claims

1. Rod-shaped supporting body for frame-like planar or three-dimensional structures showing a cross-sectional external profile with at least one concave section, characterized in that there are provided at least two longitudinal sections of different shape displaced with regard to each other in the longitudinal direction of the rod, in that at least one concavely arc-shaped contour section is provided on at least one of these longitudinal sections (2, 3, 10, 11, AF, KA, HKZ, HKK) and in that the longitudinal sections are connected as a single piece, by material bonding or positively.

2. Supporting body according to claim 1, characterized by at least one first longitudinal section (1, 4) having a cross-sectional external profile with boundaries being rectilinear or convexly arcuate at least in part and by at least one second longitudinal section (2, 3, AF, KA, HKZ, HKK) displaced with regard to the first longitudinal section and having a cross-sectional external profile being concavely delimited at least in part.

3. Supporting body according to claim 2, characterized in that between an external profile surface of a first longitudinal section (1, 3a) being plane or convexly arcuate by sections and a concave external profile surface of an adjacent second longitudinal section (2) there is formed a transitional section (2c, 2d) provided with vaulted surface sections.

4. Supporting body according to claim 3, characterized in that the transitional section (2c, 2d) adjoins the external profile surface of the coordinated second longitudinal section (2) without a relief, preferably at least approximately without a kink also.

5. Supporting body according to anyone of the preceding claims, characterized in that at least one second longitudinal section (3) is located within an end region of the supporting body.

6. Supporting body according to anyone of the preceding claims, characterized by a cross-sectional profile contour with at least two sections (5a, 5b) of different curvature, in particular with at least one rectilinear and at least one concavely or convexly curved contour section, preferably in an L-, T-, I-, or Z-shaped arrangement.

7. Supporting body according to anyone of the preceding claims, characterized by two concavely arc-shaped profile sections (2a) situated side by side on the circumference of the profile, therebetween forming a ridge (2b) with a summit surface extending tangentially to the circumference of the profile.

8. Supporting body according to anyone of the preceding claims, characterized by a cross-sectional shape designed as a sector of a circular ring (P1).

9. Supporting body according to claim 8, characterized in that the sector of a circular ring extends over an angle at circumference of at least approximately 90°.

10. Supporting body according to anyone of the preceding claims, characterized in that at least one end of a rod is shaped diminished in its cross-section by means of at least one vaulted surface section (KA) situated at the circumference of the rod.

11. Supporting body according to claim 10, characterized by at least one pair of vaulted surface sections (KA) situated in mutually diametral opposition at the circumference of the end of a rod.

12. Supporting body according to claim 10 or 11, characterized by at least one pair of vaulted surface sections (KA) situated side by side at the circumference of the end of a rod with forming an edge projection.

13. Supporting body according to anyone of claims 10 to 12, characterized in that a rod section (4) being polygonal and prismatic in its cross-section follows the end of the rod provided with at least one vaulted surface section (KA).

14. Supporting body according to anyone of claims 10 to 13, characterized in that a rod section with a rounded, in particular circular cross-section follows the end of a rod provided with at least one vaulted surface section.

15. Supporting body according to anyone of the preceding claims, characterized in that a generally cylindrical or polygonal-prismatic surface section (HKZ) with a generatrix (Z) arranged at an angle, in particular transvers, to the axis (I) of the rod is provided at least at one end of a rod.

16. Supporting body according to anyone of the preceding claims, characterized in that a general-conically or pyramidically shaped surface section (HKK) with the axis of the cone or pyramid respectively arranged at an angle, in particular transvers, to the longitudinal axis of the rod is provided at least at one end of a rod.

17. Supporting body according to anyone of the preceding claims, characterized in that the course of the longitudinal axis of a rod is curved at least by sections.

18. Set of components for frame-like planar or three-dimensional structures, characterized by the combination of the following features:
a) there is a plurality of rod-shaped supporting bodies (TK) within the planar or three-dimensional structure provided to form at least one marginal limitation of at least one frame compartment, at least one of these supporting bodies comprising at least two longitudinal sections of different shape and being displaced with regard to each other in the longitudinal direction of the rod, and shows at least one concavely curved contour section at least at one of said longitudinal sections;
b) there is at least one junction element (ASK) provided for establishing a profile transition between adjacent supporting bodies which are arranged with their longitudinal axes (I, II, III) at an angle to each other and/or which show different cross-sectional profiles;
c) there is at least one connecting device provided for establishing a preferably detachable, positive connection between adjacent supporting bodies or between at least one supporting body and a junction element;
d) the junction element (ASK) shows at least one transition surface (KA) shaped rotation-symmetrical at least in part and at least one adjacent junction surface for a coordinated supporting body (TK), said junction surface (KA) having an axis of symmetry (D) arranged at an angle to the rod axis (I; II; III) of an adjacent supporting body (TK) and forming together with said junction surface an edge of the contour adapted to the front face of the coordinated supporting body.

19. Set of components according to claim 18, characterized by a junction element with at least one concavely cylinder-shaped transition surface (HKZ).

20. Set of components according to claim 18 or 19, characterized by a junction element with at least one convexly rotation-symmetrical transition surface (KA) shaped in the kind of a groove (HK).

21. Set of components for frame-like planar or three-dimensional structures, characterized by the combination of the following features, which particularly can be applied in combination with one or more features of the claims 18 to 20 also:
a) there is a plurality of rod-shaped supporting bodies (TK) within the planar or three-dimensional structure provided to form at least one marginal limitation of at least one frame compartment, at least one of these supporting bodies comprising at least two longitudinal sections of different shape and being displaced with regard to each other in the longitudinal direction of the rod, and shows at least one concavely curved contour section at least at one of said longitudinal sections;
b) there is at least one junction element (ASK) provided for establishing a profile transition between adjacent supporting bodies which are arranged with their longitudinal axes (I, II, III) at an angle to each other and/or which showi different cross-sectional profiles;
c) there is provided at least one connecting device provided for establishing a preferably detachable, positive connection between adjacent supporting bodies or between at least one supporting body and a junction element.

22. Set of components according to claim 21, characterized in that the junction element (ASK) shows at least a pair of transition surfaces arranged in mutual opposition, one of the same is shaped at least in part concavely and the other at least in part convexly curved.

23. Set of components according to claim 22, characterized in that the transition surfaces arranged in mutual opposition are shaped as at least approximately coaxial rotation surfaces.

24. Set of components for frame-like planar or three-dimensional structures with supporting bodies according to claim 7, characterized by the combination of the following features, which particularly can be applied in combination with one or more features of the claims 18 to 23 also:
a) there is a plurality of rod-shaped supporting bodies (TK) provided within the planar or three-dimensional structure for creating marginal limitations of at least one frame compartment;
b) there is at least one junction element (ASK) provided for establishing a profile transition between adjacent supporting bodies which are arranged with their longitudinal axes (I, II, III) at an angle to each other and/or which show different cross-sectional profiles;
c) there is provided at least one connecting device provided for establishing a preferably detachable, positive connection between adjacent supporting bodies or between at least one supporting body and a junction element;
d) there are provided at least two rod-shaped supporting bodies (6, 7) which are situated contiguous, particularly in mutual connection, with two at least partially plane surfaces extending lengthwise and with concavely arc-shaped profile regions situated externally in the cross-section.

25. Set of components according to claim 24, characterized in that the concavely arc-shaped profile sections are situated diametrically to each other in the cross-section.

26. Set of components according to anyone of claims 18 to 25, characterized by at least two rod-shaped supporting bodies (TK) showing a first centering element each, and in that there is provided at least one tab-like transverse connecting element (QV) for ends of supporting bodies arranged in mutual distance, said transverse connecting element showing two second centering elements arranged in a corresponding mutual distance and being complementary to said first centering elements.

27. Set of components according to anyone of claims 18 to 26, characterized in that there is at least one rod-shaped supporting body (TKK) which on at least part of its length shows a cross-sectional shape with at least one concave external profile section, and in that there is provided at least one rod-shaped filling element (FK) with an external profile shape at least partially complementary to the concave external profile section.

28. Junction element for connecting the end sections of rod-shaped supporting bodies, at least one of which shows at least two longitudinal sections of different shape and mutually displaced in the longitudinal direction of the rod, said at least one supporting body further showing at least one concavely arc-shaped contour section and which preferably is of prismatic or generally cylindrical shape in the region of at least one end section, characterized in that the junction element shows at least two junction axes (I, II, III), preferably arranged at an angle one to the other, and at least one prismatic or generally cylindrical surface section (HKZ) with a generatrix preferably arranged in parallel to a junction axis.

29. Junction element for connecting the end sections of rod-shaped supporting bodies, at least one of which shows at least two longitudinal sections of different shape and mutually displaced in the longitudinal direction of the rod, said at least one supporting bodies further showing at least one a concavely arc-shaped contour section and which preferably is of prismatic or generally cylindrical shape in the region of at least one end section, characterized by the following features, which particularly can be applied in combination with one or more features of the claim 28 also: the junction element has at least two junction axes preferably arranged at an angle one to the other, and at least one generally cone-shaped or generally pyramid-shaped surface section, preferably with the cone or pyramid axis respectively arranged in parallel to a junction axis.

30. Junction element for connecting the end sections of rod-shaped supporting bodies, at least one of which shows at least two longitudinal sections of different shape and mutually displaced in the longitudinal direction of the rod, said at least one supporting bodies further showing at least one a concavely arc-shaped contour section and which preferably is of prismatic or generally cylindrical shape in the region of at least one end section, characterized by the following features, which particularly can be applied in combination with one or more features of the claims 28 and 29 also:
the junction element has at least two first junction axes (I, III) arranged at an angle, preferably a right angle, one to the other and for each of said axes at least one junction surface coordinated to the end section of a rod-shaped supporting body and showing a corresponding connecting element, further in that there is provided at least one second junction axis (D) with at least one connecting element acting in this axis, and in that the said second junction axis (D) is arranged at an angle less than 90° with regard to each of both said first junction axes (I, III) or with regard to a plane parallel to both said first junction axes.

31. Junction element according to claim 30, characterized in that the second junction axis (D) is arranged at an angle of at least approximately 45° with regard to one of both said first junction axes (I, III) and/or with regard to a plane parallel to both said first junction axes.

32. Connecting device for rod-shaped supporting bodies, characterized by the combination of the following features:
a) the supporting bodies comprise at least two longitudinal sections of different shape and displaced with regard to each other in the longitudinal direction of the rod, on at least one of these longitudinal sections there being at least one concavely arc-shaped contour section;
b) there is provided a junction body (ASK) with at least one junction surface adapted in shape with regard to an end section of a rod body to be joined;
c) there is provided a tension-force transmitting anchoring member (AK) arranged in the junction body in the region of the junction surface and standing in active connection with the end-section of the rod body to be joined, the active axis of said anchoring member corresponding at least approximately to the rod axis of the supporting body (TK) to be joined;
d) there is provided a tensioning device acting on the anchoring member (AK) in the direction of the tension force thereof for establishing positive connection standing under pretension between the supporting body (TK) and the junction body (ASK) to be joined;
e) the tensioning device comprises a screw member (SP), the active axis of which forms an angle less than 90°, preferably an acute angle, in particular of about 45°, with the active axis of the anchoring member, and which screw member gets in a pression force transmitting active connection with the anchoring member for establishing the positive connection between the supporting body and the junction body.

33. Connecting device according to claim 32, characterized in that the anchoring member (AK) is formed as a tension bolt projecting beyond a front face of the supporting body to be joined and having a head section (KO) with an undercut, and that in the closed position of the tensioning device the screw member (SP) with its front face acts on the undercut of the anchoring member.

34. Frame-like planar or three-dimensional structure with rod-shaped supporting bodies, characterized in that there is provided at least one frame compartment, the limitation of which is formed by at least two supporting bodies showing at least two longitudinal sections of different shape and displaced with regard to each other in the longitudinal direction of the rod, on at least one of these longitudinal sections there being at least one concavely arc-shaped contour section, and in that within said frame compartment there are provided at least two supporting bodies of different cross-sectional shape, the adjacent end sections of said supporting bodies being substantially aligned.

35. Frame-like planar or three-dimensional structure according to claim 34, characterized in that the longitudinal axis of at least one rod-shaped supporting body has an arc-shaped course.

## Revendications

1. Corps de support en forme de bâton pour des structures planes ou tridimensionelles à la façon de cadre, dans une coupe transversale le corps présentant un profil extérieur avec au moins une section concave, caractérisé par le fait qu'il sont prévues au moins deux sections longitudinales des formes différentes et décalées en direction longitudinale du bâton l'une relativement à l'autre, que dans au moins une desdites sections longitudinales (2, 3, 10, 11, AF, KA, HKZ, HKK) il est prévue au moins une section du contour arquée-concave et que cette sections longitudinales sont jointes l'une à l'autre comme une pièce unitaire, par liaison de matière ou par engagement positif.

2. Corps de support selon la revendication 1, caractérisé par au moins une section longitudinale première (1, 4) avec un profil extérieur en coupe transversale délimité en ligne droite ou en courbe convexe au moins partiellement, et par au moins une section longitudinale seconde (2, 3, AF, KA, HKZ, HKK) décalée en direction longitudinale du bâton relativement à la première section longitudinale avec un profil extérieur en coupe transversale au moins partiellement délimité en courbe concave.

3. Corps de support selon la revendication 1, caractérisé par le fait qu'il une section d'adaption (2c, 2d) avec des calottes est formée entre une surface du profil extérieure par sections plane ou en courbe d'une première section longitudinale et une surface du profil extérieure concave d'une section longitudinale seconde (2).

4. Corps de support selon la revendication 3, caractérisé par le fait que la section d'adaption (2c, 2d) se rattache à la surface du profil extérieure de la section longitudinale seconde (2) correspondante sans gradin, de préférence au moins approximativement sans coude.

5. Corps de support selon quelqu'une des revendications précédentes, caractérisé par le fait qu'au moins une section longitudinale seconde (3) est disposée dans une région terminale du corps de support.

6. Corps de support selon quelqu'une des revendications précédentes, caractérisé par un contour de profil en coupe transversale avec au moins deux sections (5a, 5b) d'une courbure différente, en particulier avec au moins une section de contour rectiligne et au moins une section de contour curviligne concavement ou convexement, de préférence en forme d'un L, T, I, ou Z.

7. Corps de support selon quelqu'une des revendications précédentes, caractérisé par deux sections de profil (2a) en courbure concave et disposées l'une à côté de l'autre dans la circonférence du profil, lesdites sections de profil formant une âme (2b) avec une surface de sommet s'étendant tangentiellement à la circonférence du profil.

8. Corps de support selon quelqu'une des revendications précédentes, caractérisé par une forme de coupe transversale façonnée comme un secteur d'un anneau de cercle (P1).

9. Corps de support selon la revendication 8, caractérisé par le fait que le secteur d'un anneau de cercle du profil en coupe transversale s'étend sur un angle d'au moins 90°.

10. Corps de support selon quelqu'une des revendications précédentes, caractérisé par le fait qu'au moins un about du bâton est d'une forme rétrécie en coupe transversale au moyen d'au moins une section de surface en calotte (KA).

11. Corps de support selon la revendication 10, caractérisé par au moins une pair des surfaces en calotte (KA) situées d'en face diamétralement dans la circonférence d'about du bâton.

12. Corps de support selon la revendication 10 ou 11, caractérisé par au moins une pair des surfaces en calotte (KA) disposées l'une à côté de l'autre dans la circonférence d'about du bâton en formant une projection angulaire.

13. Corps de support selon quelqu'une des revendications 10 à 12, caractérisé par le fait qu'une section (4) du bâton polygonale et prismatique suit l'about du bâton qui présente au moins une surface en calotte (KA).

14. Corps de support selon quelqu'une des revendications 10 à 13, caractérisé par le fait qu'une section présentant un profil en coupe transversale ronde, de préférence circulaire, suit l'about du bâton pourvu d'au moins une surface en calotte (KA).

15. Corps de support selon quelqu'une des revendications précédentes, caractérisé par le fait qu'il est prévue dans au moins un about du bâton une section de surface (HKZ) généralement cylindrique ou polygonale-prismatique avec la génératrice (Z) disposée à un angle, de préférence en travers, par rapport à l'axe (I) du bâton.

16. Corps de support selon quelqu'une des revendications précédentes, caractérisé par le fait qu'il est prévue dans au moins un about du bâton une section de surface (HKK) généralement conique ou généralement pyramidale avec l'axe du cône ou de la pyramide respectivement disposé à un angle, de préférence en travers, par rapport à l'axe longitudinal du bâton.

17. Corps de support selon quelqu'une des revendications précédentes, caractérisé par le fait que l'axe longitudinale du bâton présente un tracé en courbe au moins par sections.

18. Jeu de composants pour des structures planes ou tridimensionelles, caractérisé par la combinaison des critères suivant:
a) il y a une pluralité des corps de support (TK) en forme d'un bâton qui sont prévus pour former au moins une limitation marginale d'au moins une travée d'un cadre à l'intérieur de la structure plane ou tridimensionelle, au moins un desdites corps de support comprenant au moins deux sections longitudinales des formes différentes et décalées en direction longitudinale du bâton l'une relativement à l'autre, au moins une desdites sections longitudinales (2, 3, 10, 11, AF, KA, HKZ, HKK) présentant au moins une section du contour arquée-concave;
b) il y a au moins un élément de raccordement (ASK) prévu pour établir une adaption de profil entre des corps de support avoisinants qui sont disposés avec leur axes longitudinals (I, II, III) à un angle l'une relativement à l'autre et/ou présentent des profils différents en coupe transversale;
c) il y a au moins un dispositif jointif qui est prévu pour établir un rattachement positif, de préférence détachable, entre des corps de support avoisinants ou entre au moins un corps de support et un élément de raccordement;
d) le élément de raccordement (ASK) présente au moins une surface d'adaption (KA) qui est façonnée à symétrie de révolution au moins partiellement, et au moins une surface de rattachement adjacente pour un corps de support coordonné (TK), ladite surface d'adaption (KA) présentant un axe de symétrie (D) disposé à un angle relativement à l'axe (I, II, III) du bâtond'un corps de support (TK) contigu, et formant avec la surface d'adaption une arête de contour adaptée à la surface d'about du corps de support coordonné.

19. Jeu de composants selon la revendication 18, caractérisé par un élément de raccordement avec au moins une surface d'adaption (HKZ) concave-cylindrique.

20. Jeu de composants selon la revendication 18 ou 19, caractérisé par un élément de raccordement avec au moins une surface d'adaption (KA) convexe et façonnée à symétrie de révolution, formée à la manière d'une cannelure (HK).

21. Jeu de composants pour des structures planes ou tridimensionelles, caractérisé par la combinaison des critères suivant, qui sont utilisables en particulier combinés avec un ou plusieurs critères des revendications 18 à 20:
a) il y a une pluralité des corps de support (TK) en forme d'un bâton qui sont prévus pour former au moins une limitation marginale d'au moins une travée d'un cadre à l'intérieur de la structure plane ou tridimensionelle, au moins un desdites corps de support comprenant au moins deux sections longitudinales des formes différentes et décalées en direction longitudinale du bâton l'une relativement à l'autre, au moins une desdites sections longitudinales (2, 3, 10, 11, AF, KA, HKZ, HKK) présentant au moins une section du contour arquée-concave;
b) il y a au moins un élément de raccordement (ASK) prévu pour établir une adaption de profil entre des corps de support avoisinants qui sont disposés avec leur axes longitudinals (I, II, III) à un angle l'un relativement à l'autre et/ou présentent des profils différents en coupe transversale;
c) il est prévu au moins un dispositif jointif pour établir un rattachement positif, de préférence détachable, entre des corps de support avoisinants ou entre au moins un corps de support et un élément de raccordement.

22. Jeu de composants selon la revendication 21, caractérisé par le fait que l'élément de raccordement (ASK) présente au moins une pair des surfaces d'adaption disposées en opposition l'une à l'autre, l'une desdites surfaces étant façonnée au moins partiellement en courbure concave et l'autre au moins partiellement en courbure convexe.

23. Jeu de composants selon la revendication 22, caractérisé par le fait que les surfaces d'adaption disposées en opposition l'une à l'autre sont façonnées comme des surfaces de révolution au moins approximativement coaxiales.

24. Jeu de composants pour des structures planes ou tridimensionelles, avec des corps de support selon la revendication 7, caractérisé par la combinaison des critères suivant, qui sont utilisables en particulier combinés avec un ou plusieurs critères des revendications 18 à 23:
a) il y a une pluralité des corps de support (TK) en forme d'un bâton qui sont prévus pour former des limitations marginales d'au moins une travée d'un cadre à l'intérieur de la structure plane ou tridimensionelle;
b) il y a au moins un élément de raccordement (ASK) prévu pour établir une adaption de profil entre des corps de support avoisinants qui sont disposés avec leur axes longitudinals (I, II, III) à un angle l'un relativement à l'autre et/ou présentent des profils différents en coupe transversale;
c) il est prévu au moins un dispositif jointif pour établir un rattachement positif, de préférence détachable, entre des corps de support avoisinants ou entre au moins un corps de support et un élément de raccordement;
d) il y a au moins deux corps de support (6, 7) en forme de bâton selon la revendication 7, qui sont disposés en contact l'une à l'autre avec deux surfaces de grand côté étant au moins partiellement planes et avec des régions du profil arquées-concaves disposées à l'extérieur, les deux corps de support étant joints l'un à l'autre de préférence.

25. Jeu de composants selon la revendication 24, caractérisé par le fait que les sections du profil arquées-concaves sont disposées diamétralement l'une à l'autre en coupe transversale.

26. Jeu de composants selon quelqu'une des revendications 18 à 25, caractérisé par au moins deux corps de support en forme de bâton (TK) chacun desques présente dans au moins un about un premier élément de centrage, et caractérisé par le fait qu'il est prévu au moins un élément de connexion transversale (QV) en forme d'un collier pour des abouts des corps de support disposés en distance l'un à l'autre, ladit élément de connexion transversale présentant deux éléments de centrage seconds complémentaires aux éléments de centrage premiers et disposés en distance correspondante dans la direction longitudinale du collier.

27. Jeu de composants selon quelqu'une des revendications 18 à 26, caractérisé par le fait qu'il y a au moins un corps de support en forme de bâton (TKK) présentant une forme en coupe transversale avec au moins une section du profil extérieur concave au moins dans une partie de sa longueur, et qu'il est prévu au moins un élément de remplissage (FK) avec une forme de profil extérieur au moins partiellement complémentaire à la section du profil extérieur concave.

28. Élément de raccordement pour connecter les sections terminales des corps de support en forme de bâton, au moins un desdites corps de support présentant au moins deux sections longitudinales des formes différentes et décalées en direction longitudinale du bâton l'une relativement à l'autre, au moins une desdites sections longitudinales présentant au moins une section du contour arquée-concave, et ledit au moins un corps de support de préférence dans la région d'au moins un about du bâton étant façonné comme un prisme ou un cylindre général, caractérisé par le fait que l'élément de raccordement présente au moins deux axes de raccordement (I, II, III) de préférence disposés à un angle l'un relativement à l'autre, et au moins une section de surface (HKZ) prismatique ou généralement cylindrique, de préférence avec une génératrice disposée en parallèlle à une axe de raccordement.

29. Élément de raccordement pour connecter les sections terminales des corps de support en forme de bâton, au moins un desdites corps de support présentant au moins deux sections longitudinales des formes différentes et décalées en direction longitudinale du bâton l'une relativement à l'autre, au moins une desdites sections longitudinales présentant au moins une section du contour arquée-concave, et ledit au moins un corps de support de préférence dans la région d'au moins un about du bâton étant façonné comme un prisme ou un cylindre général, caractérisé par les critères suivant, qui sont utilisables en particulier combinés avec un ou plusieurs critères de la revendication 28:
l'élément de raccordement présente au moins deux axes de raccordement de préférence disposés à un angle l'un relativement à l'autre et au moins une section de surface façonnée comme un cône général ou une pyramide générale, de préférence l'axe du cône ou de la pyramide respecivement étant disposé en parallèle à un axe de raccordement.

30. Élément de raccordement pour connecter les sections terminales des corps de support en forme de bâton, au moins un desdites corps de support présentant au moins deux sections longitudinales des formes différentes et décalées en direction longitudinale du bâton l'une relativement à l'autre, au moins une desdites sections longitudinales présentant au moins une section du contour arquée-concave, et ledit au moins un corps de support de préférence dans la région d'au moins un about du bâton étant façonné comme un prisme ou un cylindre général, caractérisé par les critères suivant, qui sont utilisables en particulier combinés avec un ou plusieurs critères critères des revendications 28 et 29:
l'élément de raccordement présente au moins deux premiers axes de raccordement (I, III) disposés à un angle l'un à l'autre, de préférence à l'angle droit, et pour chacun desdites axes au moins une surface de rattachement coordonnée à la section d'about d'un corps de support en forme de bâton et présentant un élément de connexion correspondant, il est prévu au moins un axe de raccordement second (D) avec au moins un élément de connexion actif dans ledit axe et l'axe de raccordement second (D) est disposé à un angle plus petit que 90° relativement à chacun des deux premiers axes de raccordement (I, III) ou respectivement relativement à une plaine parallèle à les deux premiers axes de raccordement.

31. Élément de raccordement selon la revendication 30, caractérisé par le fait que l'axe de raccordement second (D) est disposé à un angle d'approximativement 45° relativement à l'un des deux premiers axes de raccordement (I, III) ou respectivement par rapport à une plaine parallèle à les deux premiers axes de raccordement.

32. Dispositif jointif pour des corps de support en forme de bâton, caractérisé par la combinaison des critères suivant:
a) les corps de support comprennent au moins deux sections longitudinales des formes différentes et décalées en direction longitudinale du bâton l'une relativement à l'autre et dans au moins une desdites sections longitudinales au moins une section du contour arquée-concave;
b) il est prévu un corps de rattachement (ASK) avec au moins une surface de rattachement qui est adaptée en forme à l'égard une section terminale d'un corps du bâton à rattacher;
c) il est prévu un membre d'ancrage (AK) transmettant des forces de traction disposé dans la région de la surface de rattachement du corps de rattachement et en jonction fonctionnelle avec la section terminale du corps du bâton à rattacher, l'axe actif dudit membre d'ancrage correspondant au moins approximativement à l'axe du bâton (II) du corps de support (TK) à rattacher;
d) il est prévu un dispositif tendeur agissant sur le membre d'ancrage (AK) dans la direction de la force de traction duquel pour établir un engagement positive en précontrainte entre le corps de support (TK) et le corps de rattachement (ASK);
e) le dispositif tendeur présente un membre à vis (SP) l'axe actif duquel fait un angle moindre de 90°, de préférence un angle aigu d'environ 45°, relativement à l'axe actif du membre d'ancrage et qui est en jonction fonctionnelle transmettant des forces de pression avec le membre d'ancrage pour établir l'engagement positif entre le corps de support et le corps de rattachement.

33. Dispositif de connexion selon la revendication 32, caractérisé par le fait que le membre d'ancrage (AK) est façonné comme un boulon tirant, saillant d'une surface d'about du corps de support (TK) à rattacher et présentant une section de tête (KO) avec une contre-dépouille, et que le membre à vis (SP) avec son face se prend à la contredépouille du membre d'ancrage dans la position fermée.

34. Structure plane ou tridimensionelle à la facon d'un cadre avec des corps de support en forme de bâton, caractérisé par le fait qu'il est prévu au moins une travée du cadre, la limitation de laquelle est formée par au moins deux corps de support présentant au moins deux sections longitudinales des formes différentes et décalées en direction longitudinale du bâton l'une relativement à l'autre et présentant dans au moins une desdites sections longitudinales au moins une section du contour arquée-concave, et qu'il sont prévus dans cette travée du cadre au moins deux corps de support des formes différentes en coupe transversale, principalement s'alignant avec leurs sections terminales avoisinantes.

35. Structure plane ou tridimensionelle à la facon d'un cadre selon la revendication 34, caractérisé par le fait que l'axe longitudinal d'au moins un corps de support en forme de bâton présente un tracé en courbe.
